# EUROPEAN PATENT APPLICATION

(11) **EP 1 291 398 A1**
(43) Date of publication of application: **12.03.2003**
(21) Application number: 02078508.5
(22) Date of filing: 26.08.2002
(51) Int. Cl.: C09D 11/00

(54) **Ink jet ink composition**

(30) Priority: 05.09.2001 US 946419
(71) Applicant: EASTMAN KODAK COMPANY, Rochester, New York 14650-2201 (US)
(72) Inventor: Wang, Xiaoru, Patent Legal Staff, Rochester, New York 14650-2201 (US); Bailey, David Benedict, Patent Legal Staff, Rochester, New York 14650-2201 (US); Wang, Yongcai, Patent Legal Staff, Rochester, New York 14650-2201 (US); Schofield, Edward, Patent Legal Staff, Rochester, New York 14650-2201 (US)
(74) Representative: Haile, Helen Cynthia

(57) **Abstract**

An ink composition of an organic solvent and composite colorant polymer particles, wherein the composite colorant polymer particles have a colorant phase and a polymer phase, the polymer phase of the particles being formed in situ in the presence of the colorant, the composite colorant polymer particles having a mean particle size of less than 200 nm.

## Description

This invention relates to a solvent based ink composition, more particularly, a printing ink composition containing composite colorant particles that have a colorant phase and a polymer phase which have improved dispersion characteristics.

Conventional printing inks typically comprise an oil, such as an aromatic naphthenic or paraffinic oil base, an emulsifying agent, a polymeric material, and dispersion of a coloring agent such as pigment particles made by a milling process. While it is desirable for the pigment dispersion to contain particles which are small and can be easily dispersed so that the resultant ink has desirable color characteristics, it has not been previously achieved to any large extent because smaller particles have a large amount of surface area and are inherently prone to aggregation in the ink.

W092/1564 discloses a printing ink composition comprising a dispersion of a pigment in a vehicle containing an oil and a polymer latex. However, there is a problem with this printing ink in that it has a large particle size so that the color gamut is not as large as one would like.

It is an object of this invention to provide a printing ink composition containing colorant particles that has an improved dispersion stability, and when such ink composition is printed, the resultant images on a substrate have improved image quality and physical durability.

This and other objects are achieved in accordance with this invention which relates to an ink composition comprising an organic solvent and composite colorant polymer particles, wherein the composite colorant polymer particles have a colorant phase and a polymer phase, the polymer phase of the particles being formed in situ in the presence of the colorant, the composite colorant polymer particles having a mean particle size of less than 200 nm.

The ink composition of the invention containing the composite colorant particles has better stability and improved dispersion characteristics than those prepared by the prior art.

The composite colorant polymer particles used in this invention may be prepared by the process disclosed in U.S. Patent Application Serial Number 09/822,096 by Wang et al., filed March 30, 2001 entitled "Process For Making Composite Colorant Particles". Another method of preparing such colorant particles is to attach a functional group to the particle surface, followed by emulsion polymerization.

In a preferred embodiment of the invention, the composite colorant polymer particles are made by a process comprising, in order:
I) suspending in an aqueous medium, under agitation, finely divided colorant particles to form an aqueous colorant mixture;
II) adding to the aqueous colorant mixture an addition polymerization initiator; and
III) causing the addition polymerization initiator to form a free radical while continuously introducing to the aqueous colorant mixture a monomer mixture comprising:
   a) an addition polymerization initiator, and
   b) at least one ethylenically-unsaturated monomer;
thereby forming the composite colorant particles having a colorant phase and a polymer phase.

In the process of the above-identified application, a portion of an addition polymerization initiator is added to an aqueous colorant mixture before introducing a monomer mixture which is used to form the polymer phase of the composite colorant particles. The aqueous colorant mixture comprises submicron colorant particles which are used to form the colorant phase of the composite particles. The colorant phase and the polymer phase are essentially incompatible. However there may be an interface formed between the colorant phase and polymer phase.

In a preferred embodiment of that process, the ethylenically-unsaturated monomer which may be employed comprises:
a) an ethylenically-unsaturated monomer being free of ionic charge groups and capable of addition polymerization to form a substantially water-insoluble homopolymer, and
b) another ethylenically-unsaturated monomer being capable of addition polymerization to form a substantially water-soluble homopolymer;

In accordance with the above-described process, the monomer mixture is added to the colorant mixture continuously. The duration of the addition time depends on the types of monomers and reaction temperatures employed. The addition time can be shorter for more reactive monomers and at higher reaction temperatures. For monomers of low reactivity at a lower reaction temperature, a shorter monomer addition time may flood the system with free monomers which can form secondary polymer particles which comprise essentially no colorant phase. With longer addition time, the polymerization is carried out under monomer starvation conditions and almost all the monomers are consumed by the colorant particles.

In accordance with the above process, a preferred way to cause an addition polymerization initiator to form a free radical is by using heat. Depending on the types of initiators used, the reaction temperature can vary from 30 to 90°C. Preferably the reaction temperature is at least 40°C and most preferably at least 50°C. To ensure that no free monomer is present, usually the reaction is continued for a longer time after the monomer addition. Also a second charge of initiator may need to be added to scavenge residual monomer during the final stage of the reaction to increase the reaction conversion.

Addition polymerization initiators useful in the above-described process include, for examples, an azo and diazo compounds, such as 2,2'-azobisisobutyronitrile, 2,2'-azobis(2,4-dimethyl valeronitrile), 2,2'-azobis(2,3-dimethyl butyronitrile), 2,2'-azobis(2-methyl butyronitrile), 2,2'-azobis(2,3,3-trimethyl butyronitrile), 2,2'-azobis(2-isopropyl butyronitrile), 1,1'-azobis(cyclohexane-1-carbonitrile), 2, 2'-azobis(4-methoxyl-2,4-dimethyl valeronitrile), 2-(carbamoylazo)isobutyronitrile, 4,4'-azobis(4-cyanovaleric acid), and dimethyl -2,2'azobis isobutyrate, or peroxide compounds, such as butyl peroxide, propyl peroxide, butyryl peroxide, benzoyl isobutyryl peroxide, and benzoyl peroxide, or water soluble initiators, for example, sodium persulfate, and potassium persulfate, or any redox initiators. The initiators may be used in an amount varying from 0.2 to 3 or 4 weight percent or higher by weight of the total monomers. Usually, a higher initiator concentration results in lower molecular weights of the final polymers. In general, if the colorant is an organic pigment, then good results have been obtained using either an oil-soluble initiator or a water-soluble initiator. If the colorant is an inorganic pigment, such as carbon black, then good results can be obtained using a water-soluble initiator.

Surfactants that can be used in the above-described process include, for example, a sulfate, a sulfonate, a cationic compound, a reactive surfactant, an amphoteric compound, or a polymeric protective colloid. Specific examples are described in "McCutcheon's Emulsifiers and Detergents: 1995, North American Editor". A chain transfer agent such as butyl mercaptan, may also be used to control the properties of the polymer formed.

The ethylenically-unsaturated monomers which can be used in the above-described process include, for example, the following monomers and their mixtures: acrylic acid, methacrylic acid, ethacrylic acid, methyl acrylate, ethyl acrylate, ethyl methacrylate, benzyl acrylate, benzyl methacrylate, propyl acrylate, propyl methacrylate, iso-propyl acrylate, iso-propyl methacrylate, butyl acrylate, butyl methacrylate, hexyl acrylate, hexyl methacrylate, octadecyl methacrylate, octadecyl acrylate, lauryl methacrylate, lauryl acrylate, hydroxyethyl acrylate, hydroxyethyl methacrylate, hydroxyhexyl acrylate, hydroxyhexyl methacrylate, hydroxyoctadecyl acrylate, hydroxyoctadecyl methacrylate, hydroxylauryl methacrylate, hydroxylauryl acrylate, phenethylacrylate, phenethyl methacrylate, 6-phenylhexyl acrylate, 6-phenylhexyl methacrylate, phenyllauryl acrylate, phenyllaurylmethacrylate, 3-nitrophenyl-6-hexyl methacrylate, 3-nitrophenyl-18-octadecyl acrylate, ethyleneglycol dicyclopentyl ether acrylate, vinyl ethyl ketone, vinyl propyl ketone, vinyl hexyl ketone, vinyl octyl ketone, vinyl butyl ketone, cyclohexyl acrylate,3-methacryloxypropyl-dimethylmethoxysilane, 3-methacryloxypropyl-methyldimethoxysilane,3-methacryloxypropyl-pentamethyldisiloxane, 3-methacryloxypropyltris-(trimethylsiloxy)silane,3-acryloxypropyl-dimethylmethoxysilane, acryloxypropylmethyldimethoxysilane, trifluoromethyl styrene, trifluoromethyl acrylate, trifluoromethyl methacrylate, tetrafluoropropyl acrylate, tetrafluoropropyl methacrylate, heptafluorobutyl methacrylate, isobutyl acrylate, isobutyl methacrylate, 2-ethylhexyl acrylate, 2-ethylhexyl methacrylate, isooctyl acrylate, isooctyl methacrylate, N,N-dihexyl acrylamide, N,N-dioctyl acrylamide, N,N-dimethylaminoethyl acrylate, N,N-dimethylaminoethyl methacrylate, N,N-diethylaminoethyl acrylate, N,N-diethylaminoethyl methacrylate, piperidino-N-ethyl acrylate, vinyl propionate, vinyl acetate, vinyl butyrate, vinyl butyl ether, and vinyl propyl ether ethylene, styrene, vinyl carbazole, vinyl naphthalene, vinyl anthracene, vinyl pyrene, methyl methacrylate, methyl acrylate, alpha-methylstyrene, dimethylstyrene, methylstyrene, vinylbiphenyl, glycidyl acrylate, glycidyl methacrylate, glycidyl propylene, 2-methyl-2-vinyl oxirane, vinyl pyridine, aminoethyl methacrylate, aminoethylphenyl acrylate, maleimide, N-phenyl maleimide, N-hexyl maleimide, N-vinyl-phthalimide, and N-vinyl maleimide poly(ethylene glycol) methyl ether acrylate, polyvinyl alcohol, vinyl pyrrolidone, vinyl 4-methylpyrrolidone, vinyl 4-phenylpyrrolidone, vinyl imidazole, vinyl 4-methylimidazole, vinyl 4-phenylimidazole, acrylamide, methacrylamide, N,N-dimethyl acrylamide, N-methyl acrylamide, N-methyl methacrylamide, aryloxy dimethyl acrylamide, N-methyl acrylamide, N-methyl methacrylamide, aryloxy piperidine, and N,N-dimethyl acrylamide acrylic acid, methacrylic acid, chloromethacrylic acid, maleic acid, allylamine, N,N-diethylallylamine, vinyl sulfonamide, sodium acrylate, sodium methacrylate, ammonium acrylate, ammonium methacrylate, acrylamidopropanetriethylammonium chloride, methacrylamidopropane-triethylammonium chloride, vinyl-pyridine hydrochloride, sodium vinyl phosphonate and sodium 1-methylvinylphosphonate, sodium vinyl sulfonate, sodium 1-methylvinyl-sulfonate, sodium styrenesulfonate, sodium acrylamidopropanesulfonate, sodium methacrylamidopropanesulfonate, and sodium vinyl morpholine sulfonate, allyl methacrylate, allyl acrylate, butenyl acrylate, undecenyl acrylate, undecenyl methacrylate, vinyl acrylate, and vinyl methacrylate; dienes such as butadiene and isoprene; esters of saturated glycols or diols with unsaturated monocarboxylic acids, such as, ethylene glycol diacrylate, ethylene glycol dimethacrylate, triethylene glycol dimethacrylate, 1,4-butanediol dimethacrylate, 1,3-butanediol dimethacrylate, pentaerythritol tetraacrylate, trimethylol propane trimethacrylate and polyfunctuional aromatic compounds such as divinylbenzene and the like.

In a preferred embodiment of the invention, the polymer phase comprises a polymer formed from methyl methacrylate, ethyl methacrylate, butyl methacrylate, ethyl acrylate, butyl acrylate, hexyl acrylate, n-octyl acrylate, lauryl methacrylate, 2-ethylhexyl methacrylate, nonyl acrylate, benzyl methacrylate, 2-hydroxypropyl methacrylate, acrylonitrile, methacrylonitrile, vinyl acetate, vinyl propionate, vinylidene chloride, vinyl chloride, styrene, t-butyl styrene, vinyl toluene, butadiene, isoprene, N,N-dimethyl acrylamide, acrylic acid, methacrylic acid, chloromethacrylic acid, maleic acid, allylamine, N,N-diethylallylamine, vinyl sulfonamide, ammonium acrylate, ammonium methacrylate, acrylamidopropane-triethylammonium chloride, methacrylamidopropane-triethylammonium chloride, or vinyl-pyridine hydrochloride.

A wide variety of organic and inorganic pigments, alone or in combination, may be selected as a colorant for use in the present invention. Examples of pigments which may be used in the invention include those as disclosed, for example, in U.S. Patents 5,026,427; 5,086,698; 5,141,556; 5,160,370; and 5,169,436. The exact choice of pigment will depend upon the specific application and performance requirements such as color reproduction and image stability. Pigments suitable for use in the present invention include, for example, azo pigments, monoazo pigments, disazo pigments, azo pigment lakes, β-Naphthol pigments, Naphthol AS pigments, benzimidazolone pigments, disazo condensation pigments, metal complex pigments, isoindolinone and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, diketopyrrolo pyrrole pigments, titanium oxide, iron oxide, and carbon black. Typical examples of pigments which may be used include Color Index (C. I.) Pigment Yellow 1, 2, 3, 5, 6, 10, 12, 13, 14, 16, 17, 62, 65, 73, 74, 75, 81, 83, 87, 90, 93, 94, 95, 97, 98, 99, 100, 101, 104, 106, 108, 109, 110, 111, 113, 114, 116, 117, 120, 121, 123, 124, 126, 127, 128, 129, 130, 133, 136, 138, 139, 147, 148, 150, 151, 152, 153, 154, 155, 165, 166, 167, 168, 169, 170, 171, 172, 173, 174, 175, 176, 177, 179, 180, 181, 182, 183, 184, 185, 187, 188, 190, 191, 192, 193, 194; C. I. Pigment Orange 1, 2, 5, 6, 13, 15, 16, 17, 17:1, 19, 22, 24, 31, 34, 36, 38, 40, 43, 44, 46, 48, 49, 51, 59, 60, 61, 62, 64, 65, 66, 67, 68, 69; C. I. Pigment Red 1, 2, 3, 4, 5, 6, 7, 8, 9, 10, 11, 12, 13, 14, 15, 16, 17, 18, 21, 22, 23, 31, 32, 38, 48:1, 48:2, 48:3, 48:4, 49:1, 49:2, 49:3, 50:1, 51, 52:1, 52:2, 53:1, 57:1, 60:1, 63:1, 66, 67, 68, 81, 95, 112, 114, 119, 122, 136, 144, 146, 147, 148, 149, 150, 151, 164, 166, 168, 169, 170, 171, 172, 175, 176, 177, 178, 179, 181, 184, 185, 187, 188, 190, 192, 194, 200, 202, 204, 206, 207, 210, 211, 212, 213, 214, 216, 220, 222, 237, 238, 239, 240, 242, 243, 245, 247, 248, 251, 252, 253, 254, 255,+ 256, 258, 261, 264; C.I. Pigment Violet 1, 2, 3, 5:1, 13, 19, 23, 25, 27, 29, 31, 32, 37, 39, 42, 44, 50; C.I. Pigment Blue 1, 2, 9, 10, 14, 15:1, 15:2, 15:3, 15:4, 15:6, 15, 16, 18, 19, 24:1, 25, 56, 60, 61, 62, 63, 64, 66; C.I. Pigment Green 1, 2, 4, 7, 8, 10, 36, 45; C.I. Pigment Black 1, 7, 20, 31, 32, and C.I. Pigment Brown 1, 5, 22, 23, 25, 38, 41, 42. In a preferred embodiment of the invention, the pigment set is cyan pigment, C.I. Pigment Blue 15:3; quinacridone magenta, C.I. Pigment Red 122; C.I. Pigment Yellow 155; and carbon black, C.I. Pigment Black 7.

The colorant particles employed in the present invention can also be water-soluble or water-insoluble dyes. Examples of water-soluble dyes which may be used include the sulfonate and carboxylate dyes, specifically, those that are commonly employed in ink-jet printing. Specific examples include: Sulforhodamine B (sulfonate), Acid Blue 113 (sulfonate), Acid Blue 29 (sulfonate), Acid Red 4 (sulfonate), Rose Bengal (carboxylate), Acid Yellow 17 (sulfonate), Acid Yellow 29 (sulfonate), Acid Yellow 42 (sulfonate), Acridine Yellow G (sulfonate), Nitro Blue Tetrazolium Chloride Monohydrate or Nitro BT, Rhodamine 6G, Rhodamine 123, Rhodamine B, Rhodamine B Isocyanate, Safranine O, Azure B, Azure B Eosinate, Basic Blue 47, Basic Blue 66, Thioflacin T (Basic Yellow 1), and Auramine O (Basic Yellow 2), all available from Aldrich Chemical Company. Examples of water-insoluble dyes which may be used include azo, xanthene, methine, polymethine, and anthroquinone dyes. Specific examples of water-insoluble dyes include Ciba-Geigy Orasol Blue GN, Ciba-Geigy Orasol Pink, and Ciba-Geigy Orasol Yellow.

Any organic solvent may be used in the invention. In a preferred embodiment, the organic solvent is a mineral oil, soybean oil, toluene, ethylene glycol, diethylene glycol, triethylene glycol, propylene glycol, tetraethylene glycol, polyethylene glycol, glycerol, poly(ethylene glycol) monobutyl ether, diethylene glycol monobutyl ether, xylene, kerosene, naphthalene or liquid paraffin. The organic solvent is preferably employed from 10 to 90% by weight of said composition.

As noted above, the composite colorant particles useful in the invention have a mean particle size of less than 200 nm, more preferably less than 80 nm. In a preferred embodiment of the invention, the composite colorant particles comprise up to 20% by weight of the composition. In another preferred embodiment, the composite colorant particles comprise up to 10% by weight of the composition. In another preferred embodiment, the colorant phase of the composite colorant particles has a mean size of less than 80 nm and the polymer phase has a molecular weight of greater than 5000. In still another preferred embodiment, the polymer phase has a molecular weight of greater than 10,000. In yet still another preferred embodiment, the ratio of the colorant phase to the polymer phase is from 30:70 to 70:30.

Colorant particles useful in the invention can be formed by various methods known in the art. For example, they can be prepared by pulverizing and classifying dry pigments or by spray drying of a solution containing dyes followed by redipsersing the resultant particles in water using a dispersant. They can be prepared by a suspension technique which includes dissolving a dye in, for example, a water-immiscible solvent, dispersing the solution as fine liquid droplets in an aqueous solution, and removing the solvent by evaporation or other suitable techniques. They can also be prepared by mechanically grinding a pigment material in water to a desired particle size in the presence a dispersant.

As was noted above, the term "composite" means that the colorant particles prepared by the above-described process comprise at least two physical phases. The phase domains are not separated apart from each other and there are bonds or interfaces between them.

In a solvent-based printing ink, the polymer phase composition can be selected to maximize the compatibility of the composite particles with the organic solvent used in the formulation, and to maximize the interaction with the substrate where the ink is applied. The maximized compatibility with the organic solvent produces long term storage stability, and the maximized interaction with the substrate improves the adhesion or smudge resistance of the image area.

Additional additives which may optionally be present in an ink composition include thickeners, conductivity enhancing agents, anti-kogation agents, drying agents, waterfast agents, dye solubilizers, chelating agents, binders, light stabilizers, viscosifiers, buffering agents, anti-mold agents, anti-curl agents, stabilizers and defoamers.

The following examples illustrate the utility of the present invention.

The following pigment dispersions were prepared:

### Cyan Pigment Dispersion

| Mill Grind | |
|---|---|
| Polymeric beads, mean diameter of 50 µm (milling media) | 325.0 g |
| | |
| Pigment Blue 15:3, (Sun Chemical Co.) | 30 g |
| | |
| Oleoyl methyl taurine, (OMT) sodium salt | 10.5 g |
| | |
| Deionized water | 209.5 g |
| | |
| Proxel GXL ® (biocide from Zeneca) | 0.2 g |

The above components were milled in a 2 liter double walled vessel obtained from BYK-Gardner using a high energy media mill manufactured by Morehouse-Cowles Hochmeyer. The mill was run for approximately 8 hours at room temperature. The dispersion was separated from the milling media by filtering the millgrind through a 4-8 µm KIMAX® Buchner Funnel obtained from VWR Scientific Products.

### Example 1

### Preparation of Composite Colorant Particle Dispersion 1

A stirred reactor containing 60 g of the cyan dispersion was heated to 85°C. and purged with N₂ for 2 hours. 0.03 g of initiator azobisisobutyronitrile (AIBN) in 1 gram of toluene was then added to the reactor. An emulsion containing 30 g of deionized water, 0.5 g of sodium dodecyl sulfonate surfactant, 0.03 g of AIBN, 5.88 g of butyl methacrylate and 0.12 g of divinyl benzene was added continuously for 2 hours. The reaction was allowed to continue for 4 more hours before the reactor was cooled down to room temperature. The composite colorant particles dispersed in water (composite colorant particle dispersion) were then filtered through glass fibers to remove any coagulum. The particles contained 50% by weight of a colorant phase and 50% by weight of a polymer phase.

### Composite Colorant Particle Dispersions 2-9

Composite Colorant Particle Dispersions 2 to 9 were prepared in a similar manner to 1 above based on the monomer compositions as listed in Table 1. The initiator and particle size as measured by a Microtrac Ultra Fine Particle Analyzer (Leeds and Northrup) at a 50% median value are also in Table 1.

**Table 1**

| Example | Polymer Composition* (wt. Ratio) | Initiator | Particle Size (nm) |
|---|---|---|---|
| 1 | BMA/DVB (98/2) | AIBN | 42 |
| 2 | S/BA/DVB (70/25/5) | AIBN | 45 |
| 3 | S/BA (70/30) | AIBN | 43 |
| 4 | EHMA/BMA/DVB (49/50/1) | AIBN | 41 |
| 5 | EHMA/MMA/MAA/DVB (49/46.5/1/3.5) | AIBN | 41 |
| 6 | BMA/DVB (98/2) | KPS** | 43 |
| 7 | EHMA/DVB (98/2) | AIBN | 42 |
| 8 | TTMSPMA /DVB (98/2) | AIBN | 43 |
| 9 | EHMA/MMA/DVB (49/50/1) | AIBN | 44 |

| | | | |
|---|---|---|---|
| *MMA: methyl methacrylate MAA: methacrylic acid EHMA: ethylhexyl methacrylate BMA: butyl methacrylate BA: butyl acrylate DVB: divinyl benzene S: styrene TTMSPMA: 3-[tris(trimethylsilyloxy)silyl]-propyl methacrylate | | | |
| **Potassium persulfate | | | |

### Control C-1

The Cyan Pigment Dispersion above was used.

### Control C-2

### Preparation of Polymer 1

A stirred reactor containing 30 g of deionized water was heated to 85°C. and purged with N₂ for 0.5 hour. 0.03 g of initiator sodium persulfate (NaPS) was then added to the reactor. An emulsion containing 30 g of deionized water, 0.5 g of sodium dodecyl sulfonate surfactant, 0.03 g of NaPS, 5.88 g of butyl methacrylate and 0.12 g of divinyl benzene was added continuously for 2 hours. The reaction was allowed to continue for 4 more hours before the reactor was cooled down to room temperature. The polymer was then filtered through glass fibers to remove any coagulum.

### Dispersibility in Organic Solvent

The above-prepared dispersions 1-9 and the Cyan Pigment Dispersion were freeze dried and the isolated pigment-polymer particles or cyan pigment itself were then redispersed in an organic solvent. A vial was charged with 0.05g of pigment-polymer (0.025g pigment, 0.025g polymer) and 10 ml of toluene. In addition, 0.025g of isolated cyan pigment (C-1) and a mixture of 0.025g of isolated cyan pigment with 0.025g of Polymer 1 (C-2) were also dispersed in toluene.

The dispersions were allowed to swell for 1 day and then shaken to distribute the particles evenly throughout the solvent. The degree to which the colorant settled to the bottom of the vial over a 4 hour period was taken as a measure of particle incompatibility in an organic medium. A large degree of settling is undesirable. The settling results for Dispersions 1-9 were compared to C-1 and C-2 as shown in Table 2.

The optical density of the dispersions at 630 nm was measured in a 1 cm cuvette using a spectrophotometer. The initial optical density for the completely dispersed mixture was greater than 4 for all dispersions. The dispersions were allowed to settle for 4 hours, and the optical density of the upper half of the dispersion was re-measured. The results are shown in Table 2. Higher optical densities are preferred.

### Stability of Ink Using Organic Oil

An ink using mineral oil was made by adding 5 g of the dispersions 1-9, C-1 and C-2 prepared above to 10g of mineral oil, and 1 g of stearic surfactants. The stability of the ink was evaluated by measuring particle size. Smaller particles sizes are desirable. The results are also given in Table 2

**Table 2**

| Example | Pigment (g) | Polymer (g) | 4-Hr. O.D. | Particle Size (nm) |
|---|---|---|---|---|
| 1 | 0.025 | 0.025 | >4 | 55 |
| 2 | 0.025 | 0.025 | >4 | 47 |
| 3 | 0.025 | 0.025 | >4 | 46 |
| 4 | 0.025 | 0.025 | >4 | 43 |
| 5 | 0.025 | 0.025 | >4 | 38 |
| 6 | 0.025 | 0.025 | >4 | 51 |
| 7 | 0.025 | 0.025 | >4 | 43 |
| 8 | 0.025 | 0.025 | >4 | 44 |
| 9 | 0.025 | 0.025 | >4 | 52 |
| C-1 | 0.025 | None | 0.30 | > 1000 |
| C-2 | 0.025 | 0.025 | 2.2 | > 1000 |

The above results show that an ink formulated from composite colorant polymer particles in accordance with the invention has good stability and dispersion characteristics as compared to inks using only pigment particles or pigment particles blended with polymer.

## Claims

1. An ink composition comprising an organic solvent and composite colorant polymer particles, wherein said composite colorant polymer particles have a colorant phase and a polymer phase, said polymer phase of said particles being formed in situ in the presence of said colorant, said composite colorant polymer particles having a mean particle size of less than 200 nm.

2. The composition of Claim 1 wherein said composite colorant polymer particles are made by a process comprising, in order:
I) suspending in an aqueous medium, under agitation, finely divided colorant particles to form an aqueous colorant mixture;
II) adding to said aqueous colorant mixture an addition polymerization initiator; and
III) causing said addition polymerization initiator to form a free radical while continuously introducing to said aqueous colorant mixture a monomer mixture comprising:
a) an addition polymerization initiator, and
b) at least one ethylenically-unsaturated monomer;
thereby forming said composite colorant particles having a colorant phase and a polymer phase.

3. The composition of Claim 1 wherein said colorant phase comprises a pigment.

4. The composition of Claim 3 wherein said pigment is C.I. Pigment Blue 15:3, C.I. Pigment Red 122, C.I. Pigment Yellow 155 or C.I. Pigment Black 7.

5. The composition of Claim 1 wherein the composite colorant particles comprise up to 20% by weight of said composition.

6. The composition of Claim 1 wherein the composite colorant particles comprise up to 10% by weight of said composition.

7. The composition of Claim 1 wherein said organic solvent is a mineral oil, soybean oil, toluene, ethylene glycol, diethylene glycol, triethylene glycol, propylene glycol, tetraethylene glycol, polyethylene glycol, glycerol, poly(ethylene glycol) monobutyl ether, diethylene glycol monobutyl ether, xylene, kerosene, naphthalene or liquid paraffin.

8. The composition of Claim 1 wherein said organic solvent comprises from 10 to 90% by weight of said composition.

9. The composition of Claim 1 wherein said polymer phase comprises a polymer formed from methyl methacrylate, ethyl methacrylate, butyl methacrylate, ethyl acrylate, butyl acrylate, hexyl acrylate, n-octyl acrylate, lauryl methacrylate, 2-ethylhexyl methacrylate, nonyl acrylate, benzyl methacrylate, 2-hydroxypropyl methacrylate, acrylonitrile, methacrylonitrile, vinyl acetate, vinyl propionate, vinylidene chloride, vinyl chloride, styrene, t-butyl styrene, vinyl toluene, butadiene, isoprene, N,N-dimethyl acrylamide, acrylic acid, methacrylic acid, chloromethacrylic acid, maleic acid, allylamine, N,N-diethylallylamine, vinyl sulfonamide, ammonium acrylate, ammonium methacrylate, acrylamidopropane-triethylammonium chloride, methacrylamidopropane-triethylammonium chloride, or vinyl-pyridine hydrochloride.

10. The composition of Claim 1 wherein said composite colorant polymer particles have a mean particle size of less than 80 nm.
